# EUROPEAN PATENT APPLICATION

(11) **EP 3 154 011 A1**
(43) Date of publication of application: **12.04.2017**
(21) Application number: 16192851.0
(22) Date of filing: 07.10.2016
(51) Int. Cl.: G06Q 10/08

(54) **IDENTIFICATION OF INDUSTRIAL EQUIPMENT USING MICRO-LOCATION SERVICES**

(30) Priority: 08.10.2015 US 201514878659
(71) Applicant: Rockwell Automation Technologies, Inc., Mayfield Heights, OH 44124 (US)
(72) Inventor: DEYOUNG, Daniel S., Hudson, OH Ohio 44236 (US); ERICCSON, Matthew R., Lyndhurst, OH Ohio 44124 (US); REICHARD, Douglas, Fairview Park, OH Ohio 44126 (US); OHLSEN, Michael, Chesterland, OH Ohio 44026 (US); SINGHAI, Mohit, Lyndhurst, OH Ohio 44124 (US); PLACHE, Kenneth S., Scottsdale, AZ Arizona 85255 (US)
(74) Representative: Grünecker Patent- und Rechtsanwälte PartG mbB

(57) **Abstract**

Techniques to facilitate identification of industrial equipment using micro-location services in an industrial automation environment are disclosed herein. In at least one implementation, an identification signal is detected transmitted from a wireless transceiver associated with an asset of the industrial automation environment. The identification signal is processed to determine an identity of the asset. Information associated with the asset is retrieved based on the identity of the asset. The information associated with the asset is displayed on a display system of a computing system.

## Description

### TECHNICAL FIELD

Aspects of the disclosure are related to computing hardware and software technology.

### TECHNICAL BACKGROUND

Software applications that run on computing systems commonly provide some type of user client interface to present information to the user and receive user inputs. In a typical client-server architecture, an application running on a client computing system receives data transmitted from a server over a communication network for display to the user on the user client interface.

Industrial automation environments utilize machines during the industrial manufacturing process. These machines typically have various moving parts and other components that continually produce operational data over time, such as pressure, temperature, speed, and other metrics. Reviewing and monitoring this operational data is of high importance to those involved in operating an industrial enterprise.

In traditional implementations, the operational data may be provided for display on a variety of systems and devices, such as notebook or tablet computers running standalone applications, web browsers, and the like, in order to present the information to the user. For example, a tablet computer could receive a constant stream of the operational data over a network and display this information dynamically, such as by providing live tiles, icons, charts, trends, and other graphical representations which continually receive updated operational data from external data sources, which are typically located in the industrial automation environment.

### OVERVIEW

Techniques to facilitate identification of industrial equipment using micro-location services in an industrial automation environment are disclosed herein. In at least one implementation, an identification signal is detected transmitted from a wireless transceiver associated with an asset of the industrial automation environment. The identification signal is processed to determine an identity of the asset. Information associated with the asset is retrieved based on the identity of the asset. The information associated with the asset is displayed on a display system of a computing system.

This Overview is provided to introduce a selection of concepts in a simplified form that are further described below in the Detailed Description. It should be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 is a block diagram that illustrates an operation of a communication system in an exemplary implementation.
Figure 2 is a flow diagram that illustrates an operation of a computing system in an exemplary implementation.
Figure 3 is a block diagram that illustrates an operational scenario of a computing system in an exemplary implementation.
Figure 4 is a block diagram that illustrates an operational scenario involving a computing system in an industrial automation environment in an exemplary implementation.
Figure 5 is a block diagram that illustrates a computing system in an exemplary implementation.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

In an industrial automation environment, investigation is primarily dependent on available plant-wide information, which is typically accessible over a network of machines and other equipment. For example, technicians and other users commonly review tag data, trends, alarms, documentation, incident reports, chat transcripts, screen captures, and other content that is generated during the course of operating an industrial enterprise. However, this information is often not readily accessible when interacting with a machine, control system, or some other asset of the industrial operation. Thus, maintaining inventory, identifying equipment, and tracking assets in an industrial manufacturing environment can be difficult with existing solutions. Even once a piece of equipment has been identified, it may be challenging to correlate the equipment to the related software, logical and physical topology, status information, security access, documentation, and other content associated with the equipment. The techniques disclosed herein attempt to facilitate identification of industrial equipment by including micro-location devices with individual pieces of equipment and processing the identification signal transmitted by the micro-location devices to correlate the identifiers to their related assets.

In at least one implementation, a user operates a computing system such as a smartphone, tablet, or laptop to detect an identification signal transmitted by a micro-location device attached to an asset of the industrial automation environment, such as a beacon transmission, radio frequency identification (RFID), or any other wireless identification technique. The identification signal indicates an identifier of the asset that can be used to retrieve information associated with the asset for display to the user. The information provides context into industrial services and software related to the equipment and can further enable location-based workflows according to the user's proximity to a particular device. In this manner, the user is able to view production processes, manage alarms, access dashboards, monitor control information and logic, send control instructions to equipment, and other relevant functionality.

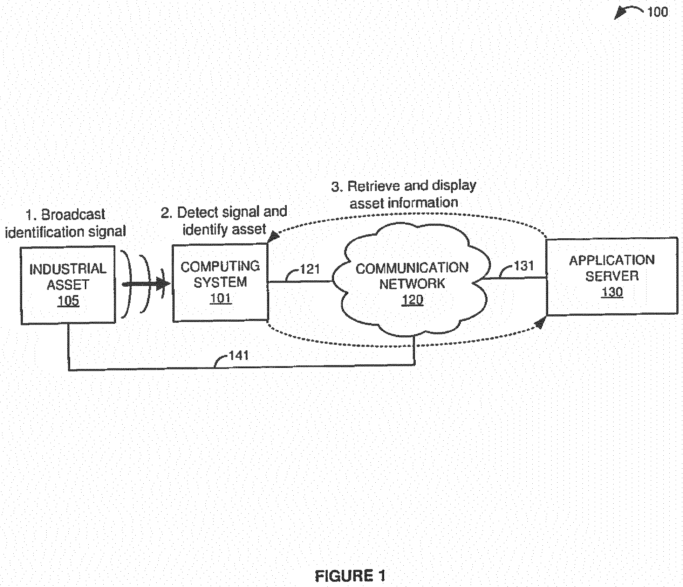

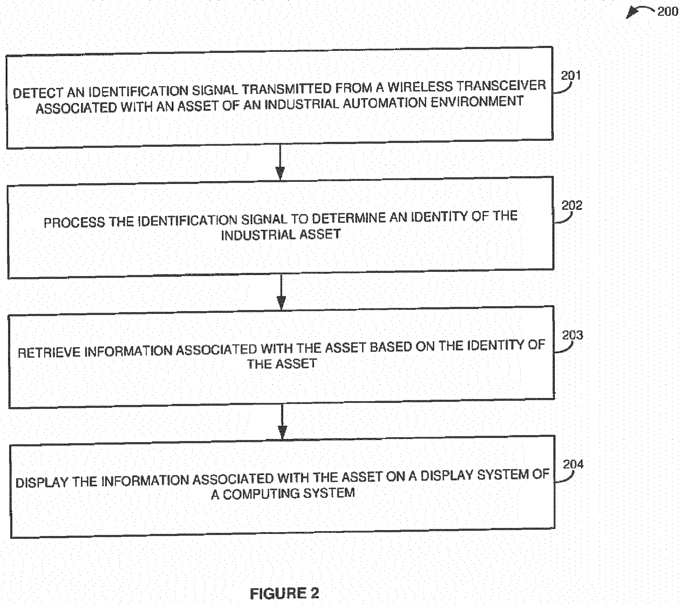

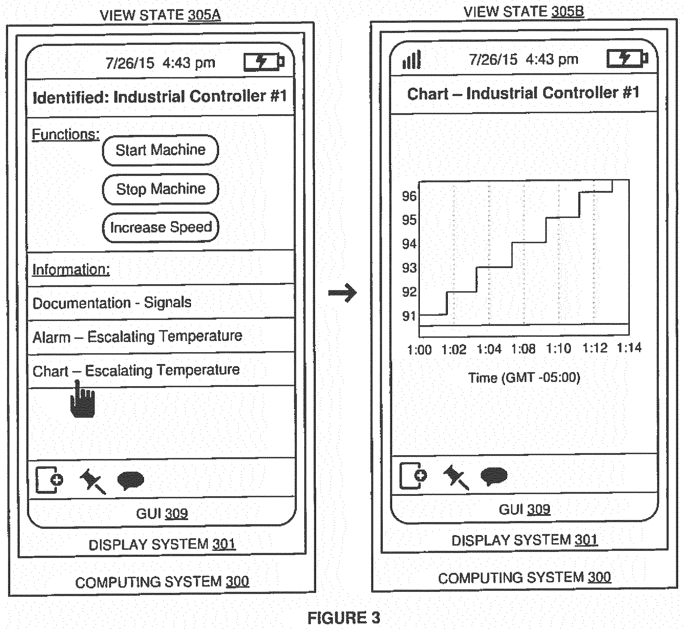

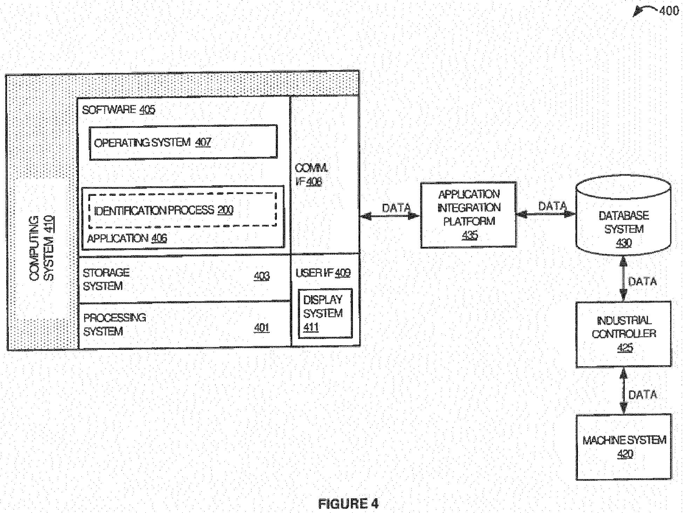

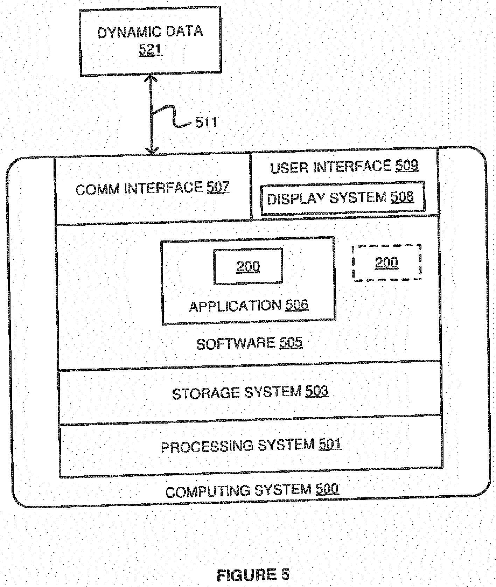

Referring now to the drawings, Figure 1 illustrates a communication system and an operational scenario in which a computing system detects an identification signal transmitted by an asset and retrieves information associated with the asset. Figure 2 illustrates an identification process that may be performed by a computing system. Figure 3 illustrates an operational scenario involving a computing system in an exemplary implementation that automatically displays functions and information associated with an industrial asset. Figure 4 illustrates an exemplary industrial automation environment that includes a computing system that may be used to execute an identification process, and Figure 5 illustrates an exemplary computing system that may be used to perform any of the identification processes and operational scenarios described herein.

Turning now to Figure 1, an operational scenario of communication system 100 is illustrated in an exemplary implementation. Communication system 100 includes computing system 101, communication network 120, and application server 130. Computing system 101 and communication network 120 communicate over communication link 121, while communication network 120 and application server 130 are in communication over communication link 131. Industrial asset 105 and communication network 120 are linked over communication link 141. In some examples, communication network 120 could comprise an on-premise private network or private cloud accessible over a local network connection, a public cloud-based environment accessible over a wide area network such as the Internet, or any other deployment scheme, including combinations thereof.

An exemplary operation of communication system 100 is illustrated in Figure 1, the order of which is designated by the numerals 1 through X, but note that the steps could be performed in any order for any operation described herein. In this example, a user operates computing system 101 while walking through an industrial automation environment. Industrial asset 105 continuously broadcasts a wireless signal that identifies the asset 105, such as a radio frequency identification (RFID) tag, Bluetooth® beacon, near-field communication (NFC) signal, or any other wireless identifier associated with asset 105. When the user approaches industrial asset 105, computing system 101 detects the wireless signal identifying asset 105 and determines the identity of the asset. Based on the identity of the asset 105, computing system 101 can then retrieve information associated with the asset and display the information for viewing by the user. Additionally, in some implementations computing system 101 could transmit commands to operate various functions of industrial asset 105, which could occur either automatically or at the request of the user. For example, additional functionality may be enabled based on a proximity of computing system 101 to industrial asset 105. An exemplary operation of computing system 101 will now be described in greater detail with respect to Figure 2.

Figure 2 is a flow diagram that illustrates an operation 200 of a computing system in an exemplary implementation. The operation 200 shown in Figure 2 may also be referred to as identification process 200 herein. The steps of the operation are indicated below parenthetically. The following discussion of operation 200 will proceed with reference to computing system 101, industrial asset 105, and application server 130 of Figure 1 in order to illustrate its operations, but note that the details provided in Figure 1 are merely exemplary and not intended to limit the scope of process 200 to the specific implementation shown in Figure 1.

Operation 200 may be employed to facilitate identification of industrial equipment using micro-location services in an industrial automation environment. As shown in the operational flow of process 200, computing system 101 detects an identification signal transmitted from a wireless transceiver associated with an asset 105 of the industrial automation environment (201). In some examples, industrial asset 105 could comprise any machine or group of machines, industrial control systems comprising an industrial controller or controllers, departments or areas of a facility, a team of people responsible for an area of a facility, a work shift, physical barriers such as doors or gates, switches, materials, resources, or any other aspect of an industrial automation environment. The wireless transceiver of industrial assets 105 transmits the identification signal that identifies asset 105 to enable micro-location services for asset 105. In some implementations, the wireless transceiver that transmits the identification signal could either be integrated within asset 105 or attached thereto, such as a Bluetooth® low energy

(BLE) sticker attached to a piece of industrial equipment or machinery. The wireless transceiver of industrial asset 105 is configured to continuously transmit the identification signal for detection by computing system 101, such as a BLE beacon, Apple® iBeacon, RFID tag, NFC signal, IEEE 802.11 protocols (Wi-Fi), or any other wireless signal detectable by computing system 101, including combinations thereof.

Computing system 101 processes the identification signal to determine an identity of industrial asset 105 (202). Typically, the identification signal broadcast by industrial asset 105 includes a device identifier, serial number, or some other information that uniquely identifies industrial asset 105. Computing system 101 processes the identification signal to extract this identifying information to determine the identity of asset 105.

Computing system 101 then retrieves information associated with asset 105 based on the identity of the asset (203). In some implementations, computing system 101 could retrieve the information associated with asset 105 from application server 130 associated with the industrial automation environment, but the information associated with asset 105 could be stored locally within computing system 101 and thus retrieved from a local storage system of computing system 101. Examples of the information associated with asset 105 that could be retrieved by computing system 101 include operational data, machine data, images, screen graphics data, screen captures, video data, sound recordings, production processes, tag data, control information and logic, alarms, notifications, drive configurations, dashboards, human-machine interface (HMI) display screens, key performance indicators (KPIs), charts, trends, and other graphical content, simulation data, version numbers, catalogs, spare parts inventories, maintenance/repair schedules, links to documentation, electrical drawings, manuals, material safety data sheets, standard operating procedures, emergency procedures, cleanout procedures, reset procedures, safety procedures, incident reports including problems and solutions, chat transcripts, and any other information associated with the asset of the industrial environment. The information associated with the asset could also include a number of machine stops in a day or during a work shift, summary of overall equipment effectiveness (OEE), summary of key performance indicators, number of users who connected to the asset in a work shift or some other period, modifications to a configuration of the asset, customized reports, and any other statistics or related data associated with industrial asset 105.

Computing system 101 displays the information associated with asset 105 on a display system of computing system 101 (204). In some implementations, computing system 101 could display the information in different formats or presentations by processing the data retrieved for asset 105 and generating various graphical views, display screens, and other arrangements of the information. The user can then browse through the information displayed on computing system 101 to view relevant content associated with the asset 105.

In at least one implementation, in addition to retrieving and displaying information, computing system 101 could transfer a command that instructs asset 105 to perform an action. In some examples, computing system 101 could transfer the command to the asset 105, a control system associated with the asset 105, application server 130, or any other device or system that may receive a command and instruct asset 105 to perform an action. The action could include any function associated with the asset 105, such as starting or stopping a machine, controlling mechanical operations, managing alarms, alerts, and other notifications, manual or automatic equipment control, enabling or disabling physical push buttons or other control mechanisms of asset 105, activating a light switch, or any other active operations related to an industrial asset 105.

Further, since computing system 101 will typically only be capable of detecting the identification signal associated with asset 105 when computing system 101 is located within a close proximity to the asset, this proximity information can be used to enable additional functionality and services related to the asset. For example, computing system 101 can notify the user when a particular asset 105 is within range of computing system 101. The user could also be prompted to perform a task related to the proximate asset 105, or notified when an alert, alarm, or some other event related to the nearby asset 105 is triggered. In some examples, since asset 105 is known to be in proximity to computing system 101 and the user, computing system 101 could offer functionality in a more passive manner, suggesting content or operations as opposed to requiring the user to actively request information and actions.

Various security measures could also be implemented for ensuring the user of computing system 101 is authorized to receive requested information or direct asset 105 to perform an action. In at least one implementation computing system 101 may transfer the command that instructs asset 105 to perform an action by transferring the command upon receiving an indication of authorization associated with a user of the computing system 101. User access to particular assets using computing system 101 could also be tracked, providing additional security logs and statistics on users performing actions on proximate assets they encounter when navigating through an industrial enterprise. A user's proximity to the asset 105 could also be considered along with the indication of authorization. For example, a push button that starts a machine may not be activated unless the user is authorized to activate the push button and the user's computing system 101 is in proximity to the machine. To determine user authorization, computing system 101 could prompt the user for a password or personal identification number, scan fingerprint data or other biometrics, identify the user's wireless security card, or request and receive any other user-identifying information to authorize the user. Functionality could also be controlled by the type of equipment, user/worker role, shift (on-shift or off-shift), training/certification, or any other considerations. In one exemplary scenario, the user could approach a physical barrier, such as a door or gate, and computing system 101 could detect a signal transmitted from a wireless transceiver attached to the barrier to identify it, verify user authorization to pass through the barrier, and responsively send a command to unlock and open the barrier. Any other actions requested by the user of computing system 101 could be similarly verified for user authorization and proximity prior to processing the command and performing the action.

Advantageously, computing system 101 wirelessly detects identification signals transmitted by various assets in an industrial environment and retrieves and displays information related to the assets in proximity. The user can then review the relevant data associated with the assets encountered by the user when traveling through the industrial environment. The user may also provide control instructions for industrial machinery and equipment within the user's proximity. In this manner, the user is better able to identify and control equipment, maintain inventory, and track assets, thereby improving user productivity and enhancing management of industrial operations. An example of a user operating a computing system that detects an industrial asset and automatically provides functions and information associated with the asset presented on a graphical user interface that illustrates one possible implementation of the techniques disclosed herein will now be discussed with respect to Figure 3.

Figure 3 is a block diagram that illustrates an operational scenario of computing system 300 in an exemplary implementation. Computing system 300 includes display system 301 which displays graphical user interface (GUI) 309. In this example, display system 301 comprises a touch screen that displays GUI 309 for the user to interact with and accepts input commands from the user via the user's touches on the surface of the touch screen. In Figure 3, two different view states are shown displayed on display system 301, labeled 305A and 305B. The different view states show the changes that occur to GUI 309 as the user makes selections and interacts with GUI 309.

In view state 305A, a user operating computing system 300 has approached an industrial controller equipped with a wireless beacon that continually broadcasts an identifier associated with the controller. Computing system 300 is configured to scan for and identify such wireless beacon transmissions and automatically retrieve functionality, information, and other content associated with the asset. In this example, computing system 300 identifies industrial controller number one and responsively displays functions and information associated with the controller that the user is authorized to access. In particular, computing system 300 displays functionality for the user to start, stop, or increase the speed of a machine controlled by industrial controller number one. Computing system 300 also retrieves and displays information associated with documentation regarding signals, an alarm warning of an escalating temperature of a machine, and a chart that displays the escalating temperature of the machine graphically. The user can then select from the various functions and information items displayed on display system 301 of computing system 300. In view state 305A, the user selects to view the chart related to the "Escalating Temperature" event, as represented by the hand icon appearing over this information item.

View state 305B illustrates an exemplary chart diagram that may appear on display system 301 in response to the user selecting the chart data item from the list of items displayed in view state 305A. The chart shows the details of the "Escalating Temperature" event associated with the "Industrial Controller #1" asset. In particular, the chart indicates that the temperature has steadily risen over time, which has triggered the "Escalating Temperature" alarm. Beneficially, the information items that are automatically displayed in response to identifying the wireless beacon transmitted by the industrial controller, which in this case allows the user to quickly view the details of the alarm event, thereby enabling the user to take the necessary action to address the problem, saving valuable time and preventing potential damage to industrial equipment while minimizing the impact on production output.

Referring back to Figure 1, computing system 101 comprises a processing system and communication transceiver. Computing system 101 may also include other components such as a user interface, data storage system, and power supply. Computing system 101 may reside in a single device or may be distributed across multiple devices. Examples of computing system 101 include mobile computing devices, such as cell phones, tablet computers, laptop computers, notebook computers, and gaming devices, as well as any other type of mobile computing devices and any combination or variation thereof. Examples of computing system 101 also include desktop computers, server computers, and virtual machines, as well as any other type of computing system, variation, or combination thereof. In some implementations, computing system 101 could comprise a mobile device capable of operating in a server-like fashion which, among other uses, could be utilized in a wireless mesh network.

Communication network 120 could comprise multiple network elements such as routers, gateways, telecommunication switches, servers, processing systems, or other communication equipment and systems for providing communication and data services. In some examples, communication network 120 could comprise wireless communication nodes, telephony switches, Internet routers, network gateways, computer systems, communication links, or some other type of communication equipment, including combinations thereof. Communication network 120 may also comprise optical networks, asynchronous transfer mode (ATM) networks, packet networks, wireless mesh networks (WMN), local area networks (LAN), metropolitan area networks (MAN), wide area networks (WAN), or other network topologies, equipment, or systems - including combinations thereof. Communication network 120 may be configured to communicate over metallic, wireless, or optical links. Communication network 120 may be configured to use time-division multiplexing (TDM), Internet Protocol (IP), Ethernet, optical networking, wireless protocols, communication signaling, peer-to-peer networking over Bluetooth, Bluetooth low energy, Wi-Fi Direct, near field communication (NFC), or some other communication format, including combinations thereof. In some examples, communication network 120 includes further access nodes and associated equipment for providing communication services to several computer systems across a large geographic region.

Industrial asset 105 could comprise any equipment, machinery, device, resource, or the like that may be utilized in an industrial automation environment. In some examples, industrial asset 105 could comprise any machine or group of machines, industrial control systems comprising an industrial controller or controllers, departments or areas of a facility, a team of people responsible for an area of a facility, a work shift, physical barriers such as doors or gates, switches, materials, resources, or any other aspect of an industrial automation environment.

Application server 130 may be representative of any computing apparatus, system, or systems on which the techniques disclosed herein or variations thereof may be suitably implemented. Application server 130 comprises a processing system and communication transceiver. Application server 130 may also include other components such as a router, server, data storage system, and power supply. Application server 130 may reside in a single device or may be distributed across multiple devices. Application server 130 may be a discrete system or may be integrated within other systems, including other systems within communication system 100 or an automation control system. Some examples of application server 130 include desktop computers, server computers, cloud computing platforms, and virtual machines, as well as any other type of computing system, variation, or combination thereof. In some examples, application server 130 could comprise a programmable logic controller (PLC), programmable automation controller (PAC), network switch, router, switching system, packet gateway, authentication, authorization, and accounting (AAA) server, billing system, network gateway system, Internet access node, data server, database system, service node, firewall, or some other communication system, including combinations thereof. In some implementations, a PLC, PAC, and/or specific modules within the PLC rack could provide some or all of the functionality described herein for application server 130.

Communication links 121, 131, and 141 use metal, air, space, optical fiber such as glass or plastic, or some other material as the transport medium - including combinations thereof. Communication links 121, 131, and 141 could use various communication protocols, such as TDM, IP, Ethernet, telephony, optical networking, hybrid fiber coax (HFC), communication signaling, wireless protocols, or some other communication format, including combinations thereof. Communication links 121, 131, and 141 could be direct links or may include intermediate networks, systems, or devices.

Turning now to Figure 4, a block diagram that illustrates an industrial automation environment 400 in an exemplary implementation is shown. Industrial automation environment 400 provides an example of an industrial automation environment that may be utilized to implement the identification processes disclosed herein, but other environments could also be used. Industrial automation environment 400 includes computing system 410, machine system 420, industrial controller 425, database system 430, and application integration platform 435. Machine system 420 and controller 425 are in communication over a communication link, controller 425 and database system 430 communicate over a communication link, database system 430 and application integration platform 435 communicate over a communication link, and application integration platform 435 and computing system 410 are in communication over a communication link. Note that there would typically be many more machine systems in most industrial automation environments, but the number of machine systems shown in Figure 4 has been restricted for clarity.

Industrial automation environment 400 comprises an automobile manufacturing factory, food processing plant, oil drilling operation, microprocessor fabrication facility, or some other type of industrial enterprise. Machine system 420 could comprise a sensor, drive, pump, filter, drill, motor, robot, fabrication machinery, mill, printer, or any other industrial automation equipment, including their associated control systems. A control system comprises, for example, industrial controller 425, which could include automation controllers, programmable logic controllers (PLCs), programmable automation controllers (PACs), or any other controllers used in automation control. Additionally, machine system 420 could comprise other industrial equipment, such as a brew kettle in a brewery, a reserve of coal or other resources, or any other element that may reside in an industrial automation environment 400.

Machine system 420 continually produces operational data over time. The operational data indicates the current status of machine system 420, such as parameters, pressure, temperature, speed, energy usage, operational equipment effectiveness (OEE), mean time between failure (MTBF), mean time to repair (MTTR), voltage, throughput volumes, times, tank levels, or any other performance status metrics. The operational data may comprise dynamic charts or trends, real-time video, or some other graphical content. Machine system 420 and/or controller 425 is capable of transferring the operational data over a communication link to database system 430, application integration platform 435, and computing system 410, typically via a communication network. Database system 430 could comprise a disk, tape, integrated circuit, server, or some other memory device. Database system 430 may reside in a single device or may be distributed among multiple memory devices.

Application integration platform 435 comprises a processing system and a communication transceiver. Application integration platform 435 may also include other components such as a router, server, data storage system, and power supply. Application integration platform 435 provides an example of application server 130, although server 130 could use alterative configurations. Application integration platform 435 may reside in a single device or may be distributed across multiple devices. Application integration platform 435 may be a discrete system or may be integrated within other systems - including other systems within industrial automation environment 400. In some examples, application integration platform 435 could comprise a FactoryTalk® VantagePoint server system provided by Rockwell Automation, Inc.

The communication links over which data is exchanged between machine system 420, industrial controller 425, database system 430, application integration platform 435, and communication interface 408 of computing system 410 could use metal, air, space, optical fiber such as glass or plastic, or some other material as the transport medium - including combinations thereof. The communication links could comprise multiple network elements such as routers, gateways, telecommunication switches, servers, processing systems, or other communication equipment and systems for providing communication and data services. These communication links could use various communication protocols, such as TDM, IP, Ethernet, telephony, optical networking, packet networks, wireless mesh networks (WMN), local area networks (LAN), metropolitan area networks (MAN), wide area networks (WAN), hybrid fiber coax (HFC), communication signaling, wireless protocols, communication signaling, peer-to-peer networking over Bluetooth, Bluetooth low energy, Wi-Fi Direct, near field communication (NFC), or some other communication format, including combinations thereof. The communication links could be direct links or may include intermediate networks, systems, or devices.

Computing system 410 may be representative of any computing apparatus, system, or systems on which the identification processes disclosed herein or variations thereof may be suitably implemented. Computing system 410 provides an example of a computing system that could be used as a either a server or a client device in some implementations, although such devices could have alternative configurations. Examples of computing system 410 include mobile computing devices, such as cell phones, tablet computers, laptop computers, notebook computers, and gaming devices, as well as any other type of mobile computing devices and any combination or variation thereof. Examples of computing system 410 also include desktop computers, server computers, and virtual machines, as well as any other type of computing system, variation, or combination thereof. In some implementations, computing system 410 could comprise a mobile device capable of operating in a server-like fashion which, among other uses, could be utilized in a wireless mesh network.

Computing system 410 includes processing system 401, storage system 403, software 405, communication interface 408, and user interface 409. Processing system 401 is operatively coupled with storage system 403, communication interface 408, and user interface 409. Processing system 401 loads and executes software 405 from storage system 403. Software 405 includes application 406 and operating system 407. Application 406 may include identification process 200 in some examples. When executed by computing system 410 in general, and processing system 401 in particular, software 405 directs computing system 410 to operate as described herein for identification process 200 or variations thereof. In this example, user interface 409 includes display system 411, which itself may be part of a touch screen that also accepts user inputs via touches on its surface. Computing system 410 may optionally include additional devices, features, or functionality not discussed here for purposes of brevity.

Turning now to Figure 5, a block diagram is shown that illustrates computing system 500 in an exemplary implementation. Computing system 500 provides an example of computing systems 101 and 300, or any computing system that may be used to execute identification process 200 or variations thereof, although such systems could use alternative configurations. Computing system 500 includes processing system 501, storage system 503, software 505, communication interface 507, and user interface 509. User interface 509 comprises display system 508. Software 505 includes application 506 which itself includes identification process 200. Identification process 200 may optionally be implemented separately from application 506.

Computing system 500 may be representative of any computing apparatus, system, or systems on which application 506 and identification process 200 or variations thereof may be suitably implemented. Examples of computing system 500 include mobile computing devices, such as cell phones, tablet computers, laptop computers, notebook computers, and gaming devices, as well as any other type of mobile computing devices and any combination or variation thereof. Note that the features and functionality of computing system 500 may apply as well to desktop computers, server computers, and virtual machines, as well as any other type of computing system, variation, or combination thereof.

Computing system 500 includes processing system 501, storage system 503, software 505, communication interface 507, and user interface 509. Processing system 501 is operatively coupled with storage system 503, communication interface 507, and user interface 509. Processing system 501 loads and executes software 505 from storage system 503. When executed by computing system 500 in general, and processing system 501 in particular, software 505 directs computing system 500 to operate as described herein for identification process 200 or variations thereof. Computing system 500 may optionally include additional devices, features, or functionality not discussed herein for purposes of brevity.

Referring still to Figure 5, processing system 501 may comprise a microprocessor and other circuitry that retrieves and executes software 505 from storage system 503. Processing system 501 may be implemented within a single processing device but may also be distributed across multiple processing devices or sub-systems that cooperate in executing program instructions. Examples of processing system 501 include general purpose central processing units, application specific processors, and logic devices, as well as any other type of processing device, combinations, or variations thereof.

Storage system 503 may comprise any computer readable media or storage media readable by processing system 501 and capable of storing software 505. Storage system 503 may include volatile and nonvolatile, removable and non-removable media implemented in any method or technology for storage of information, such as computer readable instructions, data structures, program modules, or other data. Storage system 503 may be implemented as a single storage device but may also be implemented across multiple storage devices or sub-systems co-located or distributed relative to each other. Storage system 503 may comprise additional elements, such as a controller, capable of communicating with processing system 501. Examples of storage media include random access memory, read only memory, magnetic disks, optical disks, flash memory, virtual memory and non-virtual memory, magnetic cassettes, magnetic tape, magnetic disk storage or other magnetic storage devices, or any other medium which can be used to store the desired information and that may be accessed by an instruction execution system, as well as any combination or variation thereof, or any other type of storage media. In no case is the storage media a propagated signal.

In operation, in conjunction with user interface 509, processing system 501 loads and executes portions of software 505, such as identification process 200, to render a graphical user interface for application 506 for display by display system 508 of user interface 509. Software 505 may be implemented in program instructions and among other functions may, when executed by computing system 500 in general or processing system 501 in particular, direct computing system 500 or processing system 501 to detect an identification signal transmitted from a wireless transceiver associated with an asset of an industrial automation environment. In addition, software 505 directs computing system 500 or processing system 501 to process the identification signal to determine an identity of the asset, and retrieve information associated with the asset based on the identity of the asset. Finally, software 505 may direct computing system 500 or processing system 501 to display the information associated with the asset on display system 508 of computing system 500.

Software 505 may include additional processes, programs, or components, such as operating system software or other application software. Examples of operating systems include Windows®, iOS®, and Android®, as well as any other suitable operating system. Software 505 may also comprise firmware or some other form of machine-readable processing instructions executable by processing system 501.

In general, software 505 may, when loaded into processing system 501 and executed, transform computing system 500 overall from a general-purpose computing system into a special-purpose computing system customized to facilitate identification of industrial equipment using micro-location services in an industrial automation environment as described herein for each implementation. For example, encoding software 505 on storage system 503 may transform the physical structure of storage system 503. The specific transformation of the physical structure may depend on various factors in different implementations of this description. Examples of such factors may include, but are not limited to the technology used to implement the storage media of storage system 503 and whether the computer-readable storage media are characterized as primary or secondary storage.

In some examples, if the computer-readable storage media are implemented as semiconductor-based memory, software 505 may transform the physical state of the semiconductor memory when the program is encoded therein. For example, software 505 may transform the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate this discussion.

It should be understood that computing system 500 is generally intended to represent a computing system with which software 505 is deployed and executed in order to implement application 506 and/or identification process 200 (and variations thereof). However, computing system 500 may also represent any computing system on which software 505 may be staged and from where software 505 may be distributed, transported, downloaded, or otherwise provided to yet another computing system for deployment and execution, or yet additional distribution. For example, computing system 500 could be configured to deploy software 505 over the internet to one or more client computing systems for execution thereon, such as in a cloud-based deployment scenario.

Communication interface 507 may include communication connections and devices that allow for communication between computing system 500 and other computing systems (not shown) or services, over a communication network 511 or collection of networks. In some implementations, communication interface 507 receives dynamic data 521 over communication network 511. Examples of connections and devices that together allow for inter-system communication may include network interface cards, antennas, power amplifiers, RF circuitry, transceivers, and other communication circuitry. The aforementioned network, connections, and devices are well known and need not be discussed at length here.

User interface 509 may include a voice input device, a touch input device for receiving a gesture from a user, a motion input device for detecting non-touch gestures and other motions by a user, and other comparable input devices and associated processing elements capable of receiving user input from a user. Output devices such as display system 508, speakers, haptic devices, and other types of output devices may also be included in user interface 509. The aforementioned user input devices are well known in the art and need not be discussed at length here. User interface 509 may also include associated user interface software executable by processing system 501 in support of the various user input and output devices discussed above. Separately or in conjunction with each other and other hardware and software elements, the user interface software and devices may provide a graphical user interface, a natural user interface, or any other kind of user interface.

The functional block diagrams, operational sequences, and flow diagrams provided in the Figures are representative of exemplary architectures, environments, and methodologies for performing novel aspects of the disclosure. While, for purposes of simplicity of explanation, methods included herein may be in the form of a a functional diagram, operational sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The above description and associated drawings teach the best mode of the invention. The following claims specify the scope of the invention. Some aspects of the best mode may not fall within the scope of the invention as specified by the claims. Also, while the preceding discussion describes embodiments employed specifically in conjunction with the monitoring and analysis of industrial processes, other applications, such as the mathematical modeling or monitoring of any man-made or naturally-existing system, may benefit from use of the concepts discussed above. Further, those skilled in the art will appreciate that the features described above can be combined in various ways to form multiple variations of the invention. As a result, the invention is not limited to the specific embodiments described above, but only by the following claims and their equivalents. The following is a list of further preferred embodiments of the invention:
Embodiment 1. One or more computer-readable storage media having program instructions stored thereon to facilitate identification of industrial equipment using micro-location services in an industrial automation environment, wherein the program instructions, when executed by a computing system, direct the computing system to at least:
   detect an identification signal transmitted from a wireless transceiver associated with an asset of the industrial automation environment;
   process the identification signal to determine an identity of the asset;
   retrieve information associated with the asset based on the identity of the asset; and
   display the information associated with the asset on a display system of the computing system.
Embodiment 2. The one or more computer-readable storage media of embodiment 1 wherein the program instructions direct the computing system to retrieve the information associated with the asset by directing the computing system to retrieve the information associated with the asset from an application server associated with the industrial automation environment.
Embodiment 3. The one or more computer-readable storage media of embodiment 1 wherein the program instructions direct the computing system to retrieve the information associated with the asset by directing the computing system to retrieve the information associated with the asset from a local storage system of the computing system.
Embodiment 4. The one or more computer-readable storage media of embodiment 1 wherein the program instructions further direct the computing system to transfer a command that instructs the asset to perform an action.
Embodiment 5. The one or more computer-readable storage media of embodiment 4 wherein the program instructions direct the computing system to transfer the command that instructs the asset to perform the action by directing the computing system to transfer the command upon receiving an indication of authorization associated with a user of the computing system and determining that the user is located within a proximity threshold of the asset.
Embodiment 6. The one or more computer-readable storage media of embodiment 1 wherein the asset of the industrial automation environment comprises an industrial control system.
Embodiment 7. The one or more computer-readable storage media of embodiment 1 wherein the information associated with the asset comprises a human-machine interface (HMI) display associated with the asset.
Embodiment 8. A method of operating a computing system to facilitate identification of industrial equipment using micro-location services in an industrial automation environment, the method comprising:
   detecting an identification signal transmitted from a wireless transceiver associated with an asset of the industrial automation environment;
   processing the identification signal to determine an identity of the asset;
   retrieving information associated with the asset based on the identity of the asset; and
   displaying the information associated with the asset on a display system of the computing system.
Embodiment 9. The method of embodiment 8 wherein retrieving the information associated with the asset comprises retrieving the information associated with the asset from an application server associated with the industrial automation environment.
Embodiment 10. The method of embodiment 8 wherein retrieving the information associated with the asset comprises retrieving the information associated with the asset from a local storage system of the computing system.
Embodiment 11. The method of embodiment 8 further comprising transferring a command that instructs the asset to perform an action.
Embodiment 12. The method of embodiment 11 wherein transferring the command that instructs the asset to perform the action comprises transferring the command upon receiving an indication of authorization associated with a user of the computing system and determining that the user is located within a proximity threshold of the asset.
Embodiment 13. The method of embodiment 8 wherein the asset of the industrial automation environment comprises an industrial control system.
Embodiment 14. The method of embodiment 8 wherein the information associated with the asset comprises a human-machine interface (HMI) display associated with the asset.
Embodiment 15. An apparatus to facilitate identification of industrial equipment using micro-location services in an industrial automation environment, the apparatus comprising:
   one or more computer-readable storage media; and
   program instructions stored on the one or more computer-readable storage media that, when executed by a processing system, direct the processing system to at least:
      detect an identification signal transmitted from a wireless transceiver associated with an asset of the industrial automation environment;
      process the identification signal to determine an identity of the asset;
      retrieve information associated with the asset based on the identity of the asset;
      display the information associated with the asset on a display system of a computing system; and
      transfer a command that instructs the asset to perform an action.
Embodiment 16. The apparatus of embodiment 15 wherein the program instructions direct the processing system to retrieve the information associated with the asset by directing the processing system to retrieve the information associated with the asset from an application server associated with the industrial automation environment.
Embodiment 17. The apparatus of embodiment 15 wherein the program instructions direct the processing system to retrieve the information associated with the asset by directing the processing system to retrieve the information associated with the asset from a local storage system of the computing system.
Embodiment 18. The apparatus of embodiment 15 wherein the program instructions direct the processing system to transfer the command that instructs the asset to perform the action by directing the processing system to transfer the command upon receiving an indication of authorization associated with a user of the computing system and determining that the user is located within a proximity threshold of the asset.
Embodiment 19. The apparatus of embodiment 15 wherein the asset of the industrial automation environment comprises an industrial control system.
Embodiment 20. The apparatus of embodiment 15 wherein the information associated with the asset comprises a human-machine interface (HMI) display associated with the asset.

## Claims

1. One or more computer-readable storage media having program instructions stored thereon to facilitate identification of industrial equipment using micro-location services in an industrial automation environment, wherein the program instructions, when executed by a computing system, direct the computing system to at least:
detect an identification signal transmitted from a wireless transceiver associated with an asset of the industrial automation environment;
process the identification signal to determine an identity of the asset;
retrieve information associated with the asset based on the identity of the asset; and
display the information associated with the asset on a display system of the computing system.

2. The one or more computer-readable storage media of claim 1 wherein:
the program instructions direct the computing system to retrieve the information associated with the asset by directing the computing system to retrieve the information associated with the asset from an application server associated with the industrial automation environment; or
the program instructions direct the computing system to retrieve the information associated with the asset by directing the computing system to retrieve the information associated with the asset from a local storage system of the computing system.

3. The one or more computer-readable storage media of claim 1 or 2 wherein the program instructions further direct the computing system to transfer a command that instructs the asset to perform an action.

4. The one or more computer-readable storage media of claim 3 wherein the program instructions direct the computing system to transfer the command that instructs the asset to perform the action by directing the computing system to transfer the command upon receiving an indication of authorization associated with a user of the computing system and determining that the user is located within a proximity threshold of the asset.

5. The one or more computer-readable storage media of one of claims 1 to 4 wherein:
the asset of the industrial automation environment comprises an industrial control system; and/or
the information associated with the asset comprises a human-machine interface, HMI, display associated with the asset.

6. A method of operating a computing system to facilitate identification of industrial equipment using micro-location services in an industrial automation environment, the method comprising:
detecting an identification signal transmitted from a wireless transceiver associated with an asset of the industrial automation environment;
processing the identification signal to determine an identity of the asset;
retrieving information associated with the asset based on the identity of the asset; and
displaying the information associated with the asset on a display system of the computing system.

7. The method of claim 6 wherein:
retrieving the information associated with the asset comprises retrieving the information associated with the asset from an application server associated with the industrial automation environment; or
retrieving the information associated with the asset comprises retrieving the information associated with the asset from a local storage system of the computing system.

8. The method of claim 6 or 7 further comprising transferring a command that instructs the asset to perform an action.

9. The method of claim 8 wherein transferring the command that instructs the asset to perform the action comprises transferring the command upon receiving an indication of authorization associated with a user of the computing system and determining that the user is located within a proximity threshold of the asset.

10. The method of one of claims 6 to 9 wherein:
the asset of the industrial automation environment comprises an industrial control system; and/or
the information associated with the asset comprises a human-machine interface, HMI,
display associated with the asset.

11. An apparatus to facilitate identification of industrial equipment using micro-location services in an industrial automation environment, the apparatus comprising:
one or more computer-readable storage media; and
program instructions stored on the one or more computer-readable storage media that, when executed by a processing system, direct the processing system to at least:
detect an identification signal transmitted from a wireless transceiver associated with an asset of the industrial automation environment;
process the identification signal to determine an identity of the asset;
retrieve information associated with the asset based on the identity of the asset;
display the information associated with the asset on a display system of a computing system; and
transfer a command that instructs the asset to perform an action.

12. The apparatus of claim 11 wherein:
the program instructions direct the processing system to retrieve the information associated with the asset by directing the processing system to retrieve the information associated with the asset from an application server associated with the industrial automation environment; or
the program instructions direct the processing system to retrieve the information associated with the asset by directing the processing system to retrieve the information associated with the asset from a local storage system of the computing system.

13. The apparatus of claim 11 or 12 wherein the program instructions direct the processing system to transfer the command that instructs the asset to perform the action by directing the processing system to transfer the command upon receiving an indication of authorization associated with a user of the computing system and determining that the user is located within a proximity threshold of the asset.

14. The apparatus of one of claims 11 to 13 wherein the asset of the industrial automation environment comprises an industrial control system.

15. The apparatus of one of claims 11 to 14 wherein the information associated with the asset comprises a human-machine interface, HMI, display associated with the asset.
